# EUROPEAN PATENT SPECIFICATION

(11) **EP 3 444 070 B1**
(45) Date of publication and mention of the grant of the patent: **10.01.2024**
(21) Application number: 18187897.6
(22) Date of filing: 08.08.2018
(51) Int. Cl.: B24B 49/04, G01B 5/00, G01B 5/08, G01B 5/20

(54) **MEASURING DEVICE**
MESSVORRICHTUNG
DISPOSITIF DE MESURE

(30) Priority: 16.08.2017 CH 10302017
(43) Date of publication of application: 20.02.2019
(73) Proprietor: Agathon AG, Maschinenfabrik, 4512 Bellach (CH)
(72) Inventor: Bobst, Christian, 4600 Olten (CH); Marti, Jürg, 4500 Solothurn (CH); Ackermann, Thomas, 4703 Kestenholz (CH)
(74) Representative: BOVARD AG

(56) References cited:
- EP-A2- 0 597 299
- DE-A1- 3 500 050
- DE-A1-102016 100 161
- US-A1- 2009 013 547
- US-A1- 2011 237 159
- US-B1- 6 668 466

## Description

### Field of the invention

The present invention relates to a measuring unit, in particular for in-process measuring during a machining process on a machine tool, in particular a grinding machine.

### Background of the Invention

Machine tools, particularly grinding machines, are known in the art. Furthermore, grinding machines in general comprise a workpiece unit, a tool unit, a measuring unit and a control unit which is connectable to the measuring unit and the tool unit. Measuring units or devices are known to be arranged for an in-process measuring in the course of the machining process, wherein control routines are integrated in the machining routines to simplify the integration of probe cycles into machining operations for reducing set-up times. The so-called in-process-measurement, i.e. a measurement in course of a machining operation, may enable high precision machining operations and may contribute to an increased manufacturing quality and process reliability.

The productivity in precision part machining is improved by reduced setting and process adjustment time through integration with automation systems. Therefore, it is possible to keep part dimensions close to nominal since process drift is quickly corrected. Probing is an established best practice for maximizing the efficiency, quality, capability and accuracy of machine tools.

A grinding machine comprising a measuring unit arranged for in-process measuring is known, wherein the measuring unit comprises a measuring head which is pivotally connected with a base body of the measuring unit for providing that the measuring head is pivoted between a rest position and a measuring position in which the measuring head is in measuring contact with the surface to be measured. Furthermore, it is known to provide a stop for limiting the motion of the measuring head from the rest position into the measuring position.

To allow in-process measuring, it is known that the measuring unit comprises an arm to connect the measuring head to the base body of the grinding machine. The arm is movably supported to follow the motion of the grinding wheel of the grinding machine during the grinding operation. The measuring head is provided with a touch-trigger for tactile scanning in all touch vectors, i.e. a touch-probe for precision measurement of 3D part geometries with robust construction.

However, it is required to provide a measuring head which is accurately adapted to the expected measure for each to-be-measured workpiece dimension and each point in the room coordinates. This may involve a single purpose measuring head or a measuring head at which for instance two measuring probes are received in an adjustable fashion. The measuring probes have to be adjusted in a high precision fashion and orientation.

A measuring device is known from EP 1 370 391 which is used for in-process measuring of crank pins during grinding operation of a grinding machine. The known measuring device has a measuring head which is connected via a rod assembly to a base body of the measuring device so as to be pivotable about a first pivot axis and so as to bring the measuring head in and out of a measuring position. To carry out an in-process measuring, the measuring head is pivoted into the measuring position and comes to rest against the crank pin to be measured. During grinding process the crank pin undergoes orbital rotation about a rotational axis of the crankshaft. The grinding wheel remains in contact with the crank pin and for this purpose is movably supported radially in respect to the rotational axis of the crankshaft. To ensure that measurements may be carried out at the crank pin during entire grinding operation, the measuring head follows the motion of the crank pin. For this purpose, the base body of the measuring device is connected to a base body of the grinding machine via a plurality of linkage elements, so that during the grinding operation the measuring device is moved in the radial direction of the crankshaft synchronously with the grinding wheel of the grinding machine. Any deviation in the kinematic relation of the linkage elements may be reflected in the location of the measuring head in respect to the workpiece.

According to US 2011/0232117 a measuring device is known for the in-process measuring of test pieces during machining operation on a machine tool, in particular grinding machining, including a stop for limiting the motion of the measuring head from the rest position into the measurement position, wherein the stop is adjustable by a motorized drive unit operatively associated with the stop. Therefore, the motorized drive unit is associated with the stop for adjusting the position of the stop in such a way that the measuring position is adjustable and is controlled by a control unit provided. But, by stopping the motion of the measuring head vibrations can be generated influencing the precision.

According to US 2011/0237159 a measuring apparatus for measuring a columnar portion of a workpiece to be machined in a grinding machine comprises a tilt arm and a measuring device. The tilt arm is attached to a support portion of the grinding machine such to be rotatable about the rotation centre of a grindstone. The measuring device is supported at the distal end of the tilt arm and is rotatable about another rotation centre parallel to the rotation centre of the grindstone.

DE 35 00 050 A1 discloses a measuring head for a grinding machine with two probes movable by a measuring head to perform a diameter measurement and a length measurement of a workpiece to be machined.

### Disclosure of the Invention

It is therefore an object of the present invention to provide a high-precision measuring of dimensional and geometrical characteristics of a workpiece to be machined with little efforts. It is another object of the present invention to provide a measuring unit which has a correspondingly positional variable construction and wherein the measuring head can be pivoted about a pivoting axis form a rest position to a measuring position more immediate and reliable and wherein the adjustment of the measuring head is displaced in a particularly simple, reliable and fast manner.

These problems are solved by a grinding machine as defined in claim 1. The machine can comprise a measuring unit with a measuring head comprising a measuring probe, e.g. a 3D touch-trigger probe, used for workpiece set-up inspection on machining tools, i.e. grinding machines. The used probes are often referred to as touch-trigger probes because they use switches that are triggered upon contact between the probe's stylus and the component to be measured or set. The measuring unit can also be provided for high-speed tactile scanning.

According to the present invention, a grinding machine comprises a wheel head arranged at a headstock, and a measuring unit for the in-process measurement during machining operation. The measuring unit comprises a measuring head, wherein the measuring head is movable between a rest position and a measuring position and means for moving the measuring head between rest position and a measuring position and a control unit. The measuring unit comprises a base element, attached to the headstock of the grinding machine and pivotable about a pivot axis and an arm to connect the measuring head to the base element, wherein the rest position and/or the measuring position of the measuring head are infinitely adjustable by a user by controlling pivoting the base element about the pivot axis by a motorized drive unit and the control unit. The measuring head is movable to a reference position to determine reference data of a reference surface processable by the control unit and the measurement data determined in the measuring position is related to the reference data determined in the reference position such that each measurement of workpiece dimensions presents a differential measurement. Therefore, the rest position and the measuring position are programmable by a user by controlling the movement of the measuring head.

The measuring head of the measuring unit for the in-process measurement is movable between the rest position and the measuring position and a reference position to determine reference data of a reference surface. In the reference position the measuring head is in contact with the reference surface provided at the machine tool preferably in vicinity of the workpiece to be measured. The measuring head can be moved to the reference position before and/or after measuring of the to-be measured workpiece to achieve an adjustment of the probing. To increase the accuracy of the probing the adjustment can be repeated with a determined frequency. In the reference position the measuring unit provides the control unit with reference data to be processed. Therefore, alternatively the measurement data determined in the measuring position of the measuring head can be related to reference data determined in the reference position such that each measurement of the workpiece dimensions presents a differential measurement. Preferably, each inaccuracy for example due to thermal drift can be eliminated.

According to the present invention, the control unit is provided to control the movement of the measuring head. Furthermore, the control unit comprises an input unit for entering at least an adjustment position of the measuring position by a user.

The measuring unit of the grinding machine according to the invention comprises means for moving the measuring head which means is a servomotor drive.

Furthermore, the measuring head can be provided to induce an electrical contact by displacement generating a signal for the control unit of the machine tool, particularly the drives. During a measuring function of the measuring unit the machine axis is moved in a measuring direction until a signal is generated by the measuring head signalising the current position of the machine axis and the coordinates can be collected in the control unit for further use.

According to the present invention the measuring unit of the grinding machine comprises a base element, attached to the headstock, a support connectable with the measuring head and an arm connecting the measuring head with the base element, wherein the base element, the arm and the support are made of different materials and are connectable.

According to the present invention, the measuring unit of the grinding machine is configured as a light-weight composite construction. The base element is made of light metal for example aluminium or aluminium alloy. The base element is formed such that the weight is reduced for example by comprising cavities.

The arm is provided to connect the base element and the measuring head. According to a preferred embodiment of the present invention, the arm is made of carbon fibre reinforced plastic (CFK). The arm is therefore of relatively low priced material and is available in different dimensions. The arm can in addition also comprise at least one tubular element, preferably two tubular elements. Therefore, the arm is made of standardised elements, providing good flexibility properties in design at low weight and a certain stiffness depending on the number of the tubular elements. Preferably the measuring unit is configured to provide a high stiffness in the measuring direction, whereby high measuring accuracy is achieved. In one embodiment the arm connecting the base element and the measuring head is configured such that it extends at least partly parallel to the measuring direction to provide a high structural stiffness.

Furthermore, to connect the arm with the measuring head, the support can be provided. The support is made of a light-weight material such as aluminium or an aluminium alloy. The support can be made by 3D printing and is of small dimensions.

With the light-weight construction of the measuring unit it is possible to move the measuring head between a rest position and a measurement position more quickly wherein the movement of the measuring head is provided by a means, particular a motorized drive unit, which is operatively associated with part of the grinding machine, particular a wheel head. According to the present invention, the means can be a servomotor provided to pivot the measuring head about a pivot axis between a rest position and an adjustable measurement position, where it is in contact with the workpiece to be probed The position of the pivot axis and the measuring position of the measuring head lie essentially on a same level, parallel to a measuring direction and orthogonal to a to-be measured surface.

With the motorized drive unit and the light-weight construction, it is possible to move the measuring head in short time offering a high-precision probing and improved process control. The high-precision probing comprises measuring of the roundness, dimensions, i.e. in all three dimensions and/or a diameter of the workpiece and/or positions of certain features provided at the workpiece. But even in case of in-process measurement, i.e. a measurement in the course of a machining operation, probing cannot be performed during active grinding process. Therefore, the time for moving the measuring head from the rest position to the measuring position and the other way set-up time prolongs the process cycle. To accelerate the movement of the measuring head about the pivot axis, it is advantageous that the weight and therefore the mass moment of inertia of the measuring unit is preferably low.

In an advantageous embodiment of the present invention, the measuring head is in form of a touch-trigger.

### Brief Description of the Drawings

A preferred embodiment of the invention is now described in more detail with reference to the enclosed drawing, given by way of non-limiting example, wherein:

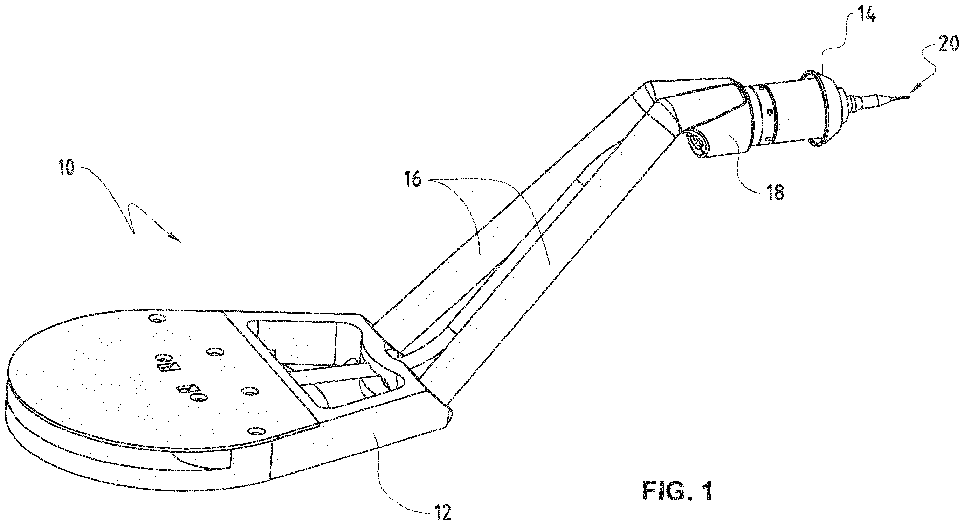

Figure 1 shows in simplified form the measuring unit in assembled form.

### Detailed Description of the Exemplary Embodiment

A measuring unit is shown in Figure 1 and in its entirety designated by 10. In the present case, the measuring unit 10 is arranged in a grinding machine. According to the present invention, the measuring unit 10 is used for an in-process measurement of a workpiece during a machining operation on a grinding machine. The grinding machine can have a grinding wheel which is rotatable about a rotational axis fixed to the machine and which is used for machining the workpiece. The measuring unit 10 comprises a base element 12 which may be arranged at a headstock (not shown) of the grinding machine as to be pivotable about a pivot axis (not shown).

Furthermore, the measuring unit 10 comprises a measuring head 14 which is connected via an arm 16 or more arms with the base element 12 of the measuring unit 10 so as to be pivotable about a pivot axis. The measuring unit 10 also has means for pivoting the measuring head 14 in or out of the measuring position. In the rest position, the measuring head 14 is disengaged from the surface of the workpiece to be probed. In the rest position, the motion of the measuring unit is blocked by the means for pivoting the measuring head 14. For pivoting the measuring head 14 in the direction toward the measuring position, the means are activated in such a way that the measuring unit 10 travels to the position wherein the measuring head 14 is in the measuring position, i.e. in contact with the surface of the workpiece. The measuring position can be any predetermined position between the rest position and a stop which is provided. The means for pivoting the measuring head 14 is adapted in such a way that the measuring position of the measuring head 14 is adjustable and a control unit is adapted to activate the means for pivoting. If it is necessary to adapt the measuring position, the desired or required position can be entered by an operator at the control unit which activates and controls the means for pivoting the measuring unit 10.

It is apparent from Figure 1 that the arm 16 forms a two-armed holding arm which supports the measuring head 14. The arm 16 can however comprise more than two arms. The measuring head 14 is supported at the arm 16 via a support 18. The measuring head 14 has a deflectable measuring probe 20, generally known to one skilled in the art and therefore not explained in greater detail.

During contact of the measuring head 14 with the surface to be measured, the measuring probe 20 records measured values, whereby on the basis of the measured values the geometries of for example a 3D part is determined with great accuracy. When the measuring probe is switched a fast input of the control unit is triggered and high precision measurement scales of the machine are read.

## Claims

1. Grinding machine comprising at least a wheel head arranged at a headstock and a measuring unit (10) for in process measurement during machining operation, comprising a measuring head (14), which is movable between a rest position and a measuring position, and means for moving the measuring head between the rest position and the measuring position and a control unit,
**characterized in that** the measuring unit (10) comprises a base element (12), which is attached to the headstock of the grinding machine as to be pivotable about a pivot axis and an arm (16) to connect the measuring head (14) to the base element (12), wherein the rest position and the measuring position of the measuring head (14) are infinitely adjustable by a user by controlling pivoting of the base element (12) about the pivot axis by a motorized drive unit as the means for moving the measuring head and by the control unit, and
that the measuring head (14) is movable into a reference position before and/or after measuring in the measuring position to determine reference data of a reference surface processable by the control unit and measurement data determined in the measuring position of the measuring head (14) is related to the reference data determined in the reference position such that each measurement of workpiece dimensions presents differential measurement.

2. Grinding machine according to claim 1, wherein the control unit comprises an input unit for entering an adjustment position of the measuring head (14) of the measuring unit (10) in the measuring position and is adapted to control the moving of the measuring head (14).

3. Grinding machine according to one of the preceding claims, wherein means for moving the measuring head (14) is a servomotor drive.

4. Grinding machine according to one of the preceding claims,
wherein the measurement unit (10) comprises a support (18) connectable with the measuring head (14), wherein the base element (12), the arm (16) and the support (18) are made of different materials and are connectable.

5. Grinding machine according to one of the preceding claims,
wherein the base element (12) of the measuring unit (10) is made of aluminium or aluminium alloy by machining process and is connectable with the headstock of the grinding machine.

6. Grinding machine according to one of the preceding claims,
wherein the arm (16) of the measuring unit (10) is made of carbon fibre reinforced plastic.

7. Grinding machine according to one of the preceding claims 4 to 6, wherein the support (18) of the measuring unit (10) is made of aluminium or aluminium alloy by a printing method.

8. Grinding machine according to one of the preceding claims,
wherein the measuring unit (10) is assembled by adhesive bonding.

9. Grinding machine according to one of the preceding claims,
wherein the measuring head (14) of the measuring unit (10) includes a measuring probe (20).

10. Grinding machine according to one of the preceding claims,
wherein the measuring unit (10) is configured for measuring one of roundness, dimensions and a diameter of a workpiece.

## Patentansprüche

1. Schleifmaschine, welche mindestens einen an einem Spindelstock angeordneten Schleifkopf und eine Messeinheit (10) zur prozessbegleitenden Messung während eines Bearbeitungsvorgangs, die einen Messkopf (14) aufweist, der zwischen einer Ruheposition und einer Messposition bewegbar ist, und Mittel zum Bewegen des Messkopfes zwischen der Ruheposition und der Messposition und eine Steuereinheit umfasst,
**dadurch gekennzeichnet, dass** die Messeinheit (10) ein Basiselement (12), welches an dem Spindelstock der Schleifmaschine um eine Schwenkachse schwenkbar angeordnet ist, und einen Arm (16) umfasst, um den Messkopf (14) mit dem Basiselement (12) zu verbinden, wobei die Ruheposition und die Messposition des Messkopfes (14) stufenlos von einem Benutzer einstellbar ist durch steuerbares Schwenken des Basiselements (12) um die Schwenkachse mittels einer motorisierten Antriebseinheit als Mittel zum Bewegen des Messkopfes und der Steuereinheit, und
dass der Messkopf (14) in eine Referenzposition vor und/oder nach Messung in der Messposition bewegbar ist, um Referenzdaten einer Referenzfläche zu ermitteln, welche von der Steuereinheit auswertbar sind, und dass in der Messposition des Messkopfes (14) ermittelte Messdaten in Bezug zu den in der Referenzposition ermittelten Referenzdaten gesetzt sind, so dass jede Messung von Werkstückabmessungen eine Differentialmessung darstellt.

2. Schleifmaschine nach Anspruch 1, wobei die Steuereinheit eine Eingabeeinheit zur Eingabe einer Einstellposition des Messkopfes (14) der Messeinheit (10) in der Messposition umfasst und eingerichtet ist, um die Bewegung des Messkopfes (14) zu steuern.

3. Schleifmaschine nach einem der vorhergehenden Ansprüche, wobei das Mittel zur Bewegung des Messkopfes (14) ein Servomotor ist.

4. Schleifmaschine nach einem der vorhergehenden Ansprüche, wobei die Messeinheit (10) einen Träger (18) umfasst, der mit dem Messkopf (14) verbindbar ist, wobei das Basiselement (12), der Arm (16) und der Träger (18) aus unterschiedlichen Materialien gefertigt und verbindbar sind.

5. Schleifmaschine nach einem der vorhergehenden Ansprüche, wobei das Basiselement (12) der Messeinheit (10) aus Aluminium oder Aluminiumlegierung durch spanende Bearbeitung gefertigt ist und mit dem Spindelstock der Schleifmaschine verbindbar ist.

6. Schleifmaschine nach einem der vorhergehenden Ansprüche, wobei der Arm (16) aus kohlenfaserverstärktem Kunststoff gefertigt ist.

7. Schleifmaschine nach einem der Ansprüche 4 bis 6, wobei der Träger (18) der Messeinheit (10) aus Aluminium oder Aluminiumlegierung durch ein Druckverfahren gefertigt ist.

8. Schleifmaschine nach einem der vorhergehenden Ansprüche, wobei die Messeinheit (10) mittels Klebeverbindung zusammengesetzt ist.

9. Schleifmaschine nach einem der vorhergehenden Ansprüche, wobei der Messkopf (14) der Messeinheit (10) einen Messtaster (20) umfasst.

10. Schleifmaschine nach einem der vorhergehenden Ansprüche, wobei die Messeinheit (10) eingerichtet ist, um Rundheit, Abmessungen und einen Durchmesser des Werkstücks zu ermitteln.

## Revendications

1. Machine de meulage comprenant au moins un porte-meule agencé au niveau d'une tête et d'une unité de mesure (10) pour effectuer des mesures en cours d'usinage, comprenant une tête de mesure (14), qui est déplaçable entre une position de repos et une position de mesure, et des moyens pour déplacer la tête de mesure entre la position de repos, la position de mesure et une unité de contrôle,
**caractérisée en ce que** l'unité de mesure (10) comprend une base (12), qui est fixée à la tête de la machine de meulage de manière à pouvoir pivoter autour d'un axe de pivotement et un bras (16) pour relier la tête de mesure (14) à la base (12), la position de repos et la position de mesure de la tête de mesure (14) étant ajustables de manière infinie par un utilisateur en contrôlant le pivotement de la base (12) autour de l'axe de pivot par une unité de guidage motorisée telle que les moyens pour déplacer la tête de mesure et par l'unité de contrôle, et
**en ce que** la tête de mesure (14) est déplaçable dans une position de référence avant et/ou après la mesure dans la position de mesure pour déterminer les données de référence d'une surface de référence transformable par l'unité de contrôle et les données de mesure dans la position de mesure de la tête de mesure (14) sont liées aux données de référence déterminée dans la position de référence de sorte que chaque mesure des dimensions des pièces à usiner présente une mesure différentielle.

2. Machine de meulage selon la revendication 1, dans laquelle l'unité de contrôle comprend une unité d'entrée pour saisir une position de réglage de la tête de mesure (14) de l'unité de mesure (10) dans la position de mesure, et est adaptée pour contrôler le déplacement de la tête de mesure (14).

3. Machine de meulage selon l'une des revendications précédentes, dans laquelle le moyen de déplacer la tête de mesure (14) est un servomoteur.

4. Machine de meulage selon l'une des revendications précédentes, dans laquelle l'unité de mesure (10) comprend un support (18) connectable avec la tête de mesure (14), dans laquelle la base (12), le bras (16) et le support (18) sont constitués de différents matériaux et peuvent être reliés les uns aux autres.

5. Machine de meulage selon l'une des revendications précédentes, dans laquelle la base (12) de l'unité de mesure (10) est réalisée en aluminium ou constituée d'alliage d'aluminium par un processus d'usinage, et est connectable avec la tête de la machine de meulage.

6. Machine de meulage selon l'une des revendications précédentes, dans laquelle le bras (16) de l'unité de mesure (10) est constitué de plastique renforcé de fibres de carbone.

7. Machine de meulage selon l'une des revendications précédentes 4 à 6, dans laquelle le support (18) de l'unité de mesure (10) est réalisé en aluminium ou en un alliage d'aluminium via une méthode d'impression.

8. Machine de meulage selon l'une des revendications précédentes, dans laquelle l'unité de mesure (10) est assemblée par collage.

9. Machine de meulage selon l'une des revendications précédentes, dans laquelle la tête de mesure (14) de l'unité de mesure (10) inclut une sonde de mesure (20).

10. Machine de meulage selon l'une des revendications précédentes, dans laquelle l'unité de mesure (10) est configurée pour mesurer la circularité, les dimensions et le diamètre d'une pièce.
